# EUROPÄISCHE PATENTSCHRIFT

(11) **EP 2 072 356 B1**
(45) Veröffentlichungstag und Bekanntmachung des Hinweises auf die Patenterteilung: **02.03.2011**
(21) Anmeldenummer: 08105654.1
(22) Anmeldetag: 24.10.2008
(51) Int. Cl.: B60S 1/04

(54) **Wischanlage für ein Kraftfahrzeug**
Wiping device for a motor vehicle
Installation de nettoyage pour un véhicule automobile

(30) Priorität: 20.12.2007 DE 102007061742
(43) Veröffentlichungstag der Anmeldung: 24.06.2009
(73) Patentinhaber: ROBERT BOSCH GMBH, 70442 Stuttgart (DE)
(72) Erfinder: Benner, Andreas, 77830 Bühlertal (DE); Pino Joaquin, Jose Carlos, 43720 Arbos del Penedes (ES); Hutzler, Norbert, 08812 Roquetes, Barcelona (ES); Surkamp, Gundolf, 08720 Vilafranca Del Penedes (Barcel) (ES)

(56) Entgegenhaltungen:
- WO-A-99/43519
- DE-A1- 19 642 667
- DE-A1- 19 860 264
- US-B1- 6 375 136

## Beschreibung

### Stand der Technik

Die Erfindung betrifft eine Wischanlage für ein Kraftfahrzeug gemäß dem Oberbegriff des Anspruchs 1 sowie die Verwendung eines Federelementes gemäß Anspruch 10.

Bekannte Frontwischanlagen weisen in der Regel ein endseitig an der Fahrzeugkarosserie festlegbares Befestigungsrohr auf, an dem neben einem Kurbelgestänge ein Wischerantrieb festgelegt ist. Dabei umfasst der Wischerantrieb einen elektrischen Antriebsmotor und ein von diesem angetriebenes Getriebe. Zum Festlegen des Wischerantriebs am Befestigungsrohr ist es bekannt, eine Schweißverbindung zu realisieren. Alternativ ist es bekannt, das Befestigungsrohr mit Hilfe einer mit dem Wischerantriebsgehäuse verschraubten Klemmplatte zu klemmen, wobei sich die Klemmplatte an Befestigungsschraubenköpfen von mit dem Wischerantriebsgehäuse verschraubten Befestigungsschrauben abstützt. Weiterhin sind Wischanlagen für Kraftfahrzeuge bekannt, bei denen das Befestigungsrohr mit Hilfe von das Befestigungsrohr durchsetzenden Befestigungsschrauben festgelegt ist. Üblicherweise ist das Befestigungsrohr hierzu in einem Befestigungsabschnitt zu einem U-Profil geprägt.

Beim Festlegen der Wischanlage am Befestigungsrohr durch Schweißen ist nachteilig, dass es sich bei einem Schweißprozess um keinen einfach zu überwachenden Fertigungsprozess handelt. Bei dem bekannten Klemmverfahren sowie dem bekannten Schraubverfahren ist nachteilig, dass derartige Montageverfahren jeweils mindestens zwei Schraubvorgänge umfassen.

Aus der DE-19642667-A1 ist es bekannt, einen Wischerantrieb an einem Befestigungsrohr mittels eines Bügels festzulegen. Weitere Wischanlagen sind aus der US-6375136-B1, der WO-99/43519-A1 sowie der DE-19860264-A1 bekannt. Nachteilig bei den bekannten Wischanlagen ist jeweils das nur schwer überschaubare Montageprozess.

### Offenbarung der Erfindung

### Technische Aufgabe

Der Erfindung liegt die Aufgabe zugrunde, eine Wischanlage vorzuschlagen, bei der der Wischerantrieb auf einfache Weise am Befestigungsrohr mit einem einfach zu überwachenden Montageprozess festlegbar ist. Bevorzugt soll auf das Vorsehen von Schraubverbindungen zum Festlegen des Wischerantriebs am Befestigungsrohr verzichtet werden können.

### Technische Lösung

Diese Aufgabe wird mit einer Wischanlage mit den Merkmalen des Anspruchs 1 sowie durch die Verwendung eines sich am Wischerantrieb abstützenden Federelementes gemäß Anspruch 10 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarten Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanken zugrunde, zum Festlegen des Wischerantriebs am Befestigungsrohr mindestens ein Federelement vorzusehen, das sich zum Beaufschlagen des Befestigungsrohres mit einer Klemmkraft am Wischerantrieb, vorzugsweise an einem Gehäuse des Wischerantriebs, abstützt. Dabei wird die vom Federelement auf das Befestigungsrohr aufgebrachte Klemmkraft bevorzugt ausschließlich am Wischerantrieb, insbesondere an einem Gehäuse des Wischerantriebs und nicht an separaten Schraubenköpfen abgestützt. Bei einem Federelement im Sinne der Erfindung handelt es sich um ein zumindest abschnittsweise elastisch verformbares Bauteil zum Beaufschlagen des Befestigungsrohres mit einer Federkraft (Klemmkraft). Durch den erwähnten Verzicht auf eine Schweißverbindung ist der Montageprozess zum Festlegen des Wischerantriebs an dem Befestigungsrohr gut überwachbar. Darüber hinaus können, insbesondere dann, wenn auf Befestigungsschrauben zum Festlegen des Federelementes am Wischerantrieb verzichtet wird, Bauteile eingespart werden, wodurch zum einen die Materialkosten gesenkt werden können und zum anderen eine beschleunigte und einfachere Montage resultiert.

Besonders geschickt ist eine Ausführungsform, bei der zum Festlegen des Federelementes am Wischerantrieb, insbesondere am Wischerantriebsgehäuse, mindestens eine Haltenut vorgesehen ist, in der das Federelement, vorzugsweise seitlich, gehalten ist. Besonders bevorzugt ist eine Ausführungsform, bei der zwei einander gegenüberliegende Haltenuten zur Führung und Fixierung des Federelementes vorgesehen sind, wobei die beiden Haltenuten mit Vorteil auf zwei einander gegenüberliegende Nutwände der Aufnahmenut für das Befestigungsrohr verteilt angeordnet sind.

Erfindungsgemäß ist vorgesehen, dass mindestens eine Haltenut, vorzugsweise die beiden Haltenuten, zum Festlegen des Federelementes nicht parallel zur Längserstreckung der Aufnahmenut verlaufen, sondern bei der die mindestens eine Haltenut, vorzugsweise die beiden einander gegenüberliegenden Haltenuten, zur Längserstreckung des Befestigungsrohres geneigt angeordnet ist/sind, vorzugsweise derart, dass das Federelement endseitig in die mindestens eine Haltenut, vorzugsweise in die beiden einander gegenüberliegenden Haltenuten, eingeschoben und in Richtung seiner Klemmposition in Längsrichtung der mindestens einen Haltenut auf das Befestigungsrohr zu verstellt werden kann. Dabei ist eine Ausführungsform besonders bevorzugt, bei der die endgültige Montageposition des Federelementes, d. h. seine Klemmposition, durch einen Rastvorsprung im Bereich der Haltenut definiert ist, in den das Federelement verrastet und so das Befestigungsrohr mit einer definierten Klemmkraft beaufschlagt.

In Weiterbildung der Erfindung ist mit Vorteil vorgesehen, dass das Federelement an dem Wischerantrieb, insbesondere an einem Wischerantriebsgehäuse, ausschließlich durch Klemmen und/oder Verrasten, also ohne den Einsatz zusätzlicher, separater Befestigungselemente, wie Befestigungsschrauben fixiert ist. Bevorzugt ist eine Ausführungsform, bei der das Federelement bei der Montage in eine Rastposition verstellbar ist, die die endgültige Montageposition des Federelementes definiert, um zum einen einen definierten Fixierprozess und damit eine definierte Klemmkraft zu realisieren und zum anderen auf einfache Weise eine Sicherung gegen ein unbeabsichtigtes Lösen des Federelementes aus seiner Klemmposition zu realisieren.

Um effektiv eine Relativbewegung des Wischerantriebs zum Befestigungsrohr in Längsrichtung des Befestigungsrohres sowie in Umfangsrichtung des Befestigungsrohres zu vermeiden, ist eine Ausführungsform bevorzugt, bei der das Federelement eine derartige Relativbewegung durch Formschluss mit dem Befestigungsrohr vermeidend angeordnet ist. Beispielsweise kann hierzu in dem Befestigungsrohr eine entsprechende Vertiefung vorgesehen werden, in die das Federelement eingreift. Alternativ kann das Befestigungsrohr mit einer am Umfang angeordneten, lateralen Öffnung versehen werden, in die ein Abschnitt des Federelementes einrastet.

In Weiterbildung der Erfindung ist mit Vorteil vorgesehen, dass das Befestigungsrohr keine seitliche Öffnung zur Aufnahme eines Abschnittes des Federelementes aufweist, sondern sich das Federelement ausschließlich am Außenumfang des Befestigungsrohres abstützt. Hierdurch können Biege- und Torsionssteifigkeitseinbußen des Befestigungsrohres aufgrund von im Stand der Technik notwendigen seitlichen Öffnungen im Befestigungsrohr mit Vorteil vermieden werden.

Um eine möglichst große Anlagefläche für das Befestigungsrohr am Wischerantrieb, insbesondere am Wischerantriebsgehäuse, bereitzustellen, ist gemäß einer bevorzugten Ausführungsform vorgesehen, dass das Befestigungsrohr mit seinem Befestigungsabschnitt in einer Aufnahmenut aufgenommen ist, die am Wischerantriebsgehäuse ausgebildet ist. Dabei durchsetzt das Befestigungsrohr die Aufnahmenut mit Vorteil in Längsrichtung. Es ist auch denkbar, mindestens zwei in Längsrichtung des Befestigungsrohres beabstandete Aufnahmenuten am Wischerantriebsgehäuse vorzusehen. Das mindestens eine das Befestigungsrohr klemmende Federelement ist bevorzugt derart angeordnet, dass es das Befestigungsrohr derart mit einer Klemmkraft beaufschlagt, dass das Befestigungsrohr gegen einen Nutboden und/oder gegen mindestens eine seitliche Nutwand der Aufnahmenut gedrückt wird.

Eine derartige Anordnung des Federelementes kann auf einfache Weise dadurch realisiert werden, dass das Federelement den freien Nutquerschnitt der Aufnahmenut abschnittsweise verschließt. Anders ausgedrückt ist eine Ausführungsform bevorzugt, bei der sich das Federelement von einer Nutwand zur anderen, also quer zur Aufnahmenutlängserstreckung erstreckt.

In Weiterbildung der Erfindung ist mit Vorteil vorgesehen, dass nicht nur ein einziges Federelement zum klemmenden Festlegen des Wischerantriebs am Befestigungsrohr vorgesehen ist, sondern bei der mindestens zwei, vorzugsweise ausschließlich zwei, in Längsrichtung des Befestigungsrohres voneinander beabstandete Federelemente vorgesehen sind. Bevorzugt ist dabei jedem Federelement mindestens eine Haltenut, vorzugsweise jeweils zwei einander gegenüberliegende Haltenuten, zugeordnet. Die Haltenuten der Federelemente können dabei einer gemeinsamen Aufnahmenut für das Befestigungsrohr oder zwei in Längsrichtung des Befestigungsrohres beabstandeten Aufnahmenuten zugeordnet werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine als Frontwischanlage ausgebildete Wisch- anlage für ein Kraftfahrzeug,
- Fig. 2:: eine entlang der Schnittlinie E-E gemäß Fig. 1 teilgeschnittene Darstellung einiger Bauteile der Wischanlage gemäß Fig. 1 und
- Fig. 3:: eine entlang der Schnittlinie A-A gemäß Fig. 2 geschnittene Darstellung der Montagekombination, umfassend den Wischerantrieb, das Befestigungs- rohr und das Federelement.

### Ausführungsformen der Erfindung

In den Figuren sind gleiche Bauteile und Bauteile mit der gleichen Funktion mit den gleichen Bezugszeichen gekennzeichnet.

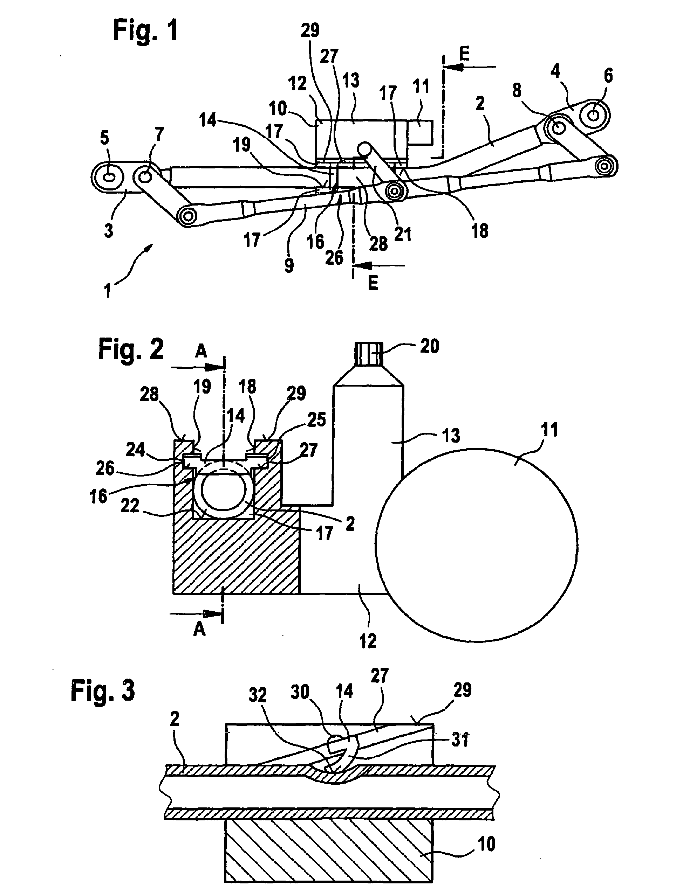

In Fig. 1 ist eine als Frontwischanlage ausgebildete Wischanlage 1 für ein Kraftfahrzeug dargestellt. Die Wischanlage 1 umfasst ein gebogenes, als hohles Rundrohr ausgebildetes Befestigungsrohr 2, das an beiden Enden mit einem Halteelement 3, 4 zum Fixieren der Wischanlage 1 an einer Fahrzeugkarosserie verbunden ist. Jedes Halteelement 3, 4 weist eine Fixieröffnung 5, 6 zur Aufnahme jeweils einer nicht gezeigten Fixierschraube auf.

Ferner ist in jedem Halteelement 3, 4 eine Wischerwelle 7, 8 verdrehbar gelagert. An den Enden der Wischerwelle 7, 8 ist jeweils ein Wischerarm mit einem Wischgummi (nicht gezeigt) montierbar.

Die Wischerwellen 7, 8 sind über ein Kurbelgestänge 9 mit einem Wischerantrieb 10 verbunden. Dieser, lediglich schematisch angedeutete Wischerantrieb 10 umfasst einen in einem Motorgehäuse 11 angeordneten Elektromotor (nicht gezeigt) sowie ein mit diesem zusammenwirkendes Schneckengetriebe (nicht gezeigt), das in einem Getriebegehäuse 12 angeordnet ist. Das Motorgehäuse 11 ist am Getriebegehäuse 12 angeflanscht und bildet zusammen mit dem Getriebegehäuse 12 ein gemeinsames Wischerantriebsgehäuse 13.

Das Wischerantriebsgehäuse 13 ist mit Hilfe zweier in Längsrichtung des Befestigungsrohres 2 voneinander beabstandeter Federelemente 14, 15, die das Befestigungsrohr 2 in einem geraden Befestigungsabschnitt 16 klemmen, am Befestigungsrohr 2 fixiert. Dabei sind die Federelemente 14, 15 ohne separate Hilfsmittel, wie Schrauben, am Wischerantriebsgehäuse 13 festgelegt und erstrecken sich quer zur Längserstreckung des Befestigungsrohres 2. Die Federelemente 14, 15 stützen sich ausschließlich am Befestigungsrohr 2 sowie am Wischerantriebsgehäuse 13 ab.

Mit seinem Befestigungsabschnitt 16 ist das Befestigungsrohr 2 in einer sich in Längsrichtung des Befestigungsrohres 2 erstreckenden Aufnahmenut 17 an der Außenseite des Wischerantriebsgehäuses 13 aufgenommen, wobei die Aufnahmenut 17, wie insbesondere aus Fig. 2 zu erkennen ist, zwei parallele, seitliche Nutwände 18, 19 aufweist.

In Fig. 2 ist eine entlang der Schnittlinie E-E gemäß Fig. 1 teilgeschnittene Ansicht von aus Übersichtlichkeitsgründen lediglich einigen Bauteilen der Wischanlage 1 aus Fig. 1 gezeigt. Zu erkennen ist das zylindrische Motorgehäuse 11, das am Getriebegehäuse 12 angeflanscht ist. Aus dem Getriebegehäuse 12 ragt eine Abtriebswelle 20 heraus, an der eine in Fig. 1 gezeigte Kurbelplatte 21 des Kurbelgestänges 9 festlegbar ist.

Aus Fig. 2 ist das U-förmige Querschnittsprofil der Aufnahmenut 17 gut zu erkennen, wobei die Aufnahmenut 17 einen in diesem Ausführungsbeispiel rechtwinklig zu den Nutwänden 18, 19 verlaufenden Nutboden 22 aufweist, an dem das Befestigungsrohr 2 mit seinem Befestigungsabschnitt 16 anliegt.

Der freie Nutquerschnitt 23 wird in Fig. 2 von den identisch ausgebildeten Federelementen 14, 15 überbrückt (gekreuzt). Aus Fig. 2 ist zu entnehmen, dass Federelemente 14, 15 gestuft ausgebildet sind, wobei ein mittlerer, als Federlaschenabschnitt 31 ausgebildeter Abschnitt gegenüber seitlichen Endabschnitten in Richtung des Befestigungsrohres 2 abgesetzt ist und unmittelbar am Außenumfang des Befestigungsrohrs 2 anliegt.

Die Federelemente 14, 15 sind mit ihren beiden Enden 24, 25 in jeweils einer Haltenut 26, 27 aufgenommen, wobei sich die Haltenuten 26, 27 im Wesentlichen in Richtung der Längserstreckung des Befestigungsrohres 2 erstrecken. Dabei sind jedem Federelement zwei einander gegenüberliegende Haltenuten 26, 27 zugeordnet.

Wie aus Fig. 3 zu erkennen ist, in der die Haltenut 27 gezeigt ist, zu der die gegenüberliegende Haltenut 26 parallel verläuft, sind die in den Nutwänden 18, 19 angeordneten Haltenuten 26, 27 unter einem Winkel α zur Längserstreckung des Befestigungsrohres 2 geneigt. Die Haltenuten 26, 27 sind weiterhin bis an die parallel zum Nutboden 22 verlaufenden Oberseiten 28, 29 der Nutwände 18, 19 geführt, so dass die Federelemente 14, 15 von den Oberseiten 28, 29 der Nutwände 18, 19 in die Haltenuten 26, 27 in Richtung deren Längserstreckung eingeschoben werden können, wodurch die Federelemente 14, 15 gegen das Befestigungsrohr 2 gepresst werden, wodurch wiederum das Befestigungsrohr 2 in der Aufnahmenut 17 geklemmt wird.

Um einen definierten Montageprozess zu realisieren, ist in den in Richtung der Aufnahmenut 17 offenen Haltenuten 26, 27 im Bereich der in Fig. 3 gezeigten Position der Federelemente 14, 15 jeweils eine Rastausnehmung 30 vorgesehen, in die das jeweilige Federelement 14, 15 einfedern kann und somit sicher gegen ein unbeabsichtigtes Lösen fixiert ist. In dieser Fixierposition greift der mittlere Federlaschenabschnitt 31 des Federelementes 14, 15 in eine muldenförmige Vertiefung 32 am Außenumfang des Befestigungsrohres 2 ein, wodurch zum einen eine Relativbewegung des Wischerantriebs 10 in Richtung der Längserstreckung des Befestigungsrohres als auch in Umfangsrichtung um das Befestigungsrohr 2 herum sicher vermieden wird.

## Patentansprüche

1. Wischanlage für ein Kraftfahrzeug mit einem Befestigungsrohr (2), an dem ein Wischerantrieb (10) festgelegt ist, wobei
zum Festlegen des Wischerantriebs (10) an dem Befestigungsrohr (2) mindestens ein das Befestigungsrohr (2) mit einer Klemmkraft beaufschlagendes, sich am Wischerantrieb (10) abstützendes Federelement (14, 15) vorgesehen ist, das sich in mindestens einer Haltenut (26, 27) abstützend angeordnet ist,
**dadurch gekennzeichnet,**
**dass** die mindestens eine Haltenut (26, 27) zur Längserstreckung des Befestigungsrohres (2) geneigt ist.

2. Wischanlage nach Anspruch 1,
**dadurch gekennzeichnet,**
**dass** das Federelement (14, 15) an dem Wischerantrieb (10) ausschließlich durch Klemmen und/oder Verrasten fixiert ist.

3. Wischanlage nach einem der Ansprüche 1 oder 2,
**dadurch gekennzeichnet,**
**dass** das Federelement (14, 15) formschlüssig mit dem Befestigungsrohr (2) verbunden ist.

4. Wischanlage nach einem der vorhergehenden Ansprüche,
**dadurch gekennzeichnet,**
**dass** das Federelement (14, 15) am Außenumfang des Befestigungsrohrs (2) anliegt und vorzugsweise nicht in dieses hineinragt.

5. Wischanlage nach einem der vorhergehenden Ansprüche,
**dadurch gekennzeichnet,**
**dass** das Befestigungsrohr (2) in einer, insbesondere am Wischerantriebsgehäuse (13) ausgebildeten, Aufnahmenut (17) angeordnet ist, und dass das Federelement (14, 15) derart angeordnet ist, dass es das Befestigungsrohr (2) gegen einen Nutboden (22) und/oder gegen mindestens eine Nutwand (18, 19) drückt.

6. Wischanlage nach Anspruch 5,
**dadurch gekennzeichnet,**
**dass** das Federelement (14, 15) einen freien Nutquerschnitt (23) der Aufnahmenut (17) kreuzend angeordnet ist.

7. Wischanlage nach einem der Ansprüche 5 oder 6,
**dadurch gekennzeichnet,**
**dass** sich das Federelement (14, 15)
in zwei auf einander gegenüberliegenden Nutwänden (18, 19) der Aufnahmenut (17) angeordneten Haltenuten (26, 27), abstützend angeordnet ist.

8. Wischanlage nach einem der vorhergehenden Ansprüchen,
**dadurch gekennzeichnet,**
**dass** mindestens zwei, vorzugsweise ausschließlich zwei, in Richtung der Längserstreckung des Befestigungsrohres (2) voneinander beabstandete, Federelemente (14, 15) zum Fixieren des Wischerantriebs (10) am Befestigungsrohr (2) vorgesehen sind.

## Claims

1. Wiper system for a motor vehicle, with a fastening tube (2) to which a wiper drive (10) is fixed, wherein, in order to fix the wiper drive (10) to the fastening tube (2), at least one spring element (14, 15) is provided, the spring element acting upon the fastening tube (2) with a clamping force, being supported on the wiper drive (10) and being arranged supported in at least one retaining groove (26, 27), **characterized in that** the at least one retaining groove (26, 27) is inclined with respect to the longitudinal extent of the fastening tube (2).

2. Wiper system according to Claim 1, **characterized in that** the spring element (14, 15) is fixed to the wiper drive (10) exclusively by clamping and/or latching.

3. Wiper system according to either of Claims 1 and 2, **characterized in that** the spring element (14, 15) is connected to the fastening tube (2) in a form-fitting manner.

4. Wiper system according to one of the preceding claims, **characterized in that** the spring element (14, 15) bears against the outer circumference of the fastening tube (2) and preferably does not project into the latter.

5. Wiper system according to one of the preceding claims, **characterized in that** the fastening tube (2) is arranged in a receiving groove (17) formed in particular on the wiper drive housing (13), and **in that** the spring element (14, 15) is arranged in such a manner that it presses the fastening tube (2) against a groove base (22) and/or against at least one groove wall (18, 19).

6. Wiper system according to Claim 5, **characterized in that** the spring element (14, 15) is arranged in a manner intersecting a free groove cross section (23) of the receiving groove (17).

7. Wiper system according to either of Claims 5 and 6, **characterized in that** the spring element (14, 15) is arranged supported in two retaining grooves (26, 27) arranged on mutually opposite groove walls (18, 19) of the receiving groove (17).

8. Wiper system according to one of the preceding claims, **characterized in that** at least two, preferably exclusively two, spring elements (14, 15) which are spaced apart from each other in the direction of the longitudinal extent of the fastening tube (2) are provided for fixing the wiper drive (10) to the fastening tube (2).

## Revendications

1. Installation de lavage pour un véhicule automobile, comprenant un tube de fixation (2), sur lequel est fixé un entraînement d'essuie-glace (10), dans laquelle
pour la fixation de l'entraînement d'essuie-glace (10) sur le tube de fixation (2), au moins un élément de ressort (14, 15) sollicitant le tube de fixation (2) avec une force de serrage, s'appuyant sur l'entraînement d'essuie-glace (10), est prévu, lequel est disposé de manière à s'appuyer dans au moins une rainure de fixation (26, 27), **caractérisée en ce que**
l'au moins une rainure de fixation (26, 27) est inclinée par rapport à l'étendue longitudinale du tube de fixation (2).

2. Installation de lavage selon la revendication 1,
**caractérisée en ce que**
l'élément de ressort (14, 15) est fixé sur l'entraînement d'essuie-glace (10) exclusivement par serrage et/ou encliquetage.

3. Installation de lavage selon l'une quelconque des revendications 1 ou 2,
**caractérisée en ce que**
l'élément de ressort (14, 15) est connecté par engagement par coopération de forme au tube de fixation (2).

4. Installation de lavage selon l'une quelconque des revendications précédentes, **caractérisée en ce que** l'élément de ressort (14, 15) s'applique contre la périphérie extérieure du tube de fixation (2) et ne pénètre de préférence pas dans celui-ci.

5. Installation de lavage selon l'une quelconque des revendications précédentes,
**caractérisée en ce que**
le tube de fixation (2) est disposé dans une rainure de réception (17) réalisée notamment sur le boîtier de l'entraînement d'essuie-glace (13), et **en ce que** l'élément de ressort (14, 15) est disposé de telle sorte qu'il presse le tube de fixation (2) contre un fond de rainure (22) et/ou contre au moins une paroi de rainure (18, 19).

6. Installation de lavage selon la revendication 5,
**caractérisée en ce que**
l'élément de ressort (14, 15) est disposé de manière à croiser une section transversale de rainure libre (23) de la rainure de réception (17).

7. Installation de lavage selon l'une quelconque des revendications 5 ou 6,
**caractérisée en ce que**
l'élément de ressort (14, 15) est disposé de manière à s'appuyer dans deux rainures de fixation (26, 27) disposées sur des parois de rainure opposées (18, 19) de la rainure de réception (17).

8. Installation de lavage selon l'une quelconque des revendications précédentes,
**caractérisée en ce que**
l'on prévoit au moins deux, de préférence exclusivement deux éléments de ressort (14, 15) espacés l'un de l'autre dans la direction de l'étendue longitudinale du tube de fixation (2), pour la fixation de l'entraînement d'essuie-glace (10) sur le tube de fixation (2).
